# EUROPÄISCHE PATENTANMELDUNG

(11) **EP 4 815 219 A1**
(43) Veröffentlichungstag der Anmeldung: **30.09.2026**
(21) Anmeldenummer: 25165880.3
(22) Anmeldetag: 25.03.2025
(51) Int. Cl.: H01R 43/02, B23K 20/10, B23K 101/38

(54) **VERFAHREN UND VORRICHTUNG ZUM VERBINDEN EINES ELEKTRISCHEN TERMINALS MIT EINEM ELEKTRISCHEN LEITER**

(71) Anmelder: Telsonic Holding AG, 9552 Bronschhofen (CH)
(72) Erfinder: Egger, Nicolas, 9502 Braunau (CH); Ünal, Ibrahim, 8370 Sirnach (CH)
(74) Vertreter: Hepp Wenger Ryffel AG

(57) **Zusammenfassung**

Die Erfindung richtet sich auf eine Vorrichtung und ein Verfahren zum Verbinden eines elektrischen Leiters (53) mit einem elektrischen Terminal (51) mittels Ultraschall. Das Verfahren umfasst das Bewegen mindestens eines Andrückelements (1, 1') in mindestens einer insbesondere horizontalen Zustellrichtung (Z). Zudem umfasst das Verfahren vorzugsweise das Andrücken des Terminals (51) an die Auflagefläche (11) mittels des mindestens einen Andrückelements (1) in einer zur mindestens einen Zustellrichtung (Z) transversalen, insbesondere senkrechten, Andrückrichtung (A). Das Verfahren ist dadurch gekennzeichnet, dass das Bewegen im Schritt a) mittels mindestens einem elektrischen Antrieb (2) erfolgt.

## Beschreibung

Die vorliegende Erfindung befasst sich mit einem Verfahren und einer Vorrichtung zum Andrücken eines elektrischen Terminals, welcher mittels Ultraschalls mit einem elektrischen Leiter zu verschweissen ist, an eine Auflagefläche, beispielsweise eine Auflagefläche eines Ambosses gemäss dem Oberbegriff der unabhängigen Patentansprüche.

WO 2023/284981 A1 offenbart, wie zwei einander gegenüberliegende Komponenten der Vorrichtung, beispielsweise ein Amboss oder eine Sonotrode oder ein Seitenschieber und ein Touchierelement, relativ zueinander verlagert werden: Zunächst werden die Komponenten relativ zueinander in einer ersten Verlagerungsrichtung verlagert, und es wird eine erste Anschlagsposition erkannt. Anschliessend werden die Komponenten relativ zueinander in einer zur ersten Verlagerungsrichtung quer gerichteten zweiten Verlagerungsrichtung verlagert. Daraufhin werden die Komponenten erneut in der ersten Verlagerungsrichtung zueinander verlagert. Als Aktuatoren für die Komponenten der Einrichtung werden Pneumatikantriebe, Hydraulikantriebe, Stellmotoren und Servomotoren genannt. Mit einer solchen Vorrichtung können beispielsweise Litzen miteinander verschweisst werden.

Den Verfahren und die Vorrichtungen des Stands der Technik mangelt es jedoch an ausreichender Kompatibilität für das Andrücken eines elektrischen Leiters zum Verschweissen mit einem elektrischen Terminal.

Die Aufgabe der vorliegenden Erfindung besteht darin, die Nachteile des bekannten Stands der Technik zu vermeiden, insbesondere ein Verfahren und eine Vorrichtung zum zuverlässigen Aufdrücken des elektrischen Terminals bereit zu stellen. Vorzugsweise soll zudem ein Verfahren und eine Vorrichtung zur Verfügung gestellt werden, die eine Anpassung eines Behandlungsbereichs zur Behandlung mit Ultraschall des Leiters und des elektrischen Terminals, insbesondere automatisiert, ermöglicht. Das Verfahren und die Vorrichtung sollen zudem kostengünstig, kompakt, und wartungsarm sein, sowie eine höhere Genauigkeit und Systemintegration ermöglichen.

Diese und weitere Aufgaben werden erfindungsgemäss gelöst durch ein Verfahren zum Andrücken eines mittels Ultraschalls mit einem elektrischen Leiter zu verschweissenden elektrischen Terminals an eine Auflagefläche gemäss dem kennzeichnenden Teil der unabhängigen Patentansprüche. Das Verfahren enthält die Schritte:
a) Bewegen mindestens eines Andrückelements in mindestens einer insbesondere horizontaler Zustellrichtung, und
b) Insbesondere Andrücken des elektrischen Terminals an die Auflagefläche mittels des mindestens einen Andrückelements in einer zur mindestens einen Zustellrichtung transversalen, insbesondere senkrechten, Andrückrichtung.

Erfindungsgemäss erfolgt das Bewegen im Schritt a) mittels mindestens einem elektrischen Antriebs.

Der elektrische Leiter kann eine Litze sein. Der elektrische Terminal kann zumindest eine im Wesentlichen planare und/oder abgerundete Fläche aufweisen, auf dem der elektrische Leiter, beziehungsweise das Ende des elektrischen Leiters andrückbar ist. Der elektrische Terminal kann starr sein und/oder der elektrische Leiter kann zumindest teilweise verformbar sein kann.

Der mindestens eine elektrische Antrieb kann eine gleichmässigere Kraftübertragung über den gesamten Bewegungsbereich ermöglichen. Zudem können elektrische Antriebe oftmals besser hohen Belastungen standhalten als etwa pneumatische Aktuatoren.

Der elektrische Antrieb kann vorzugsweise ein Getriebe umfassen. Das Getriebe kann ein hohes Übersetzungsverhältnis aufweisen, sodass eine kleine Eingangskraft in eine grössere Ausgangskraft übersetzt wird.

Gemäss einer Ausführungsform erfolgt das Andrücken des elektrischen Terminals an die Auflagefläche nach Schritt b) ebenfalls oder alternativ mit einer Andrückeinheit umfassend/bestehend aus zumindest einem elektrischen Antrieb, insbesondere zumindest einem weiteren elektrischen Antrieb. Das Andrücken des Terminals an der Auflagefläche mittels des mindestens einen Andrückelements in der Andrückrichtung kann mit einem pneumatischen Antrieb erfolgen. Solche pneumatischen Antriebe sind günstiger und im ordnungsgemässen Betrieb typischerweise ausreichend, da in Zustellrichtung bis zum Anschlag an den Terminal angefahren wird.

Der mindestens eine elektrische Antrieb kann einen elektrischen Motor, insbesondere umfassend einen Eisenkern, einen elektromechanischen Linearantrieb, insbesondere umfassend ein Kugelgewindeantrieb, einen Schrittmotor, insbesondere einen closed-loop Schrittmotor, und/oder einen Servomotor umfassen.

Solche elektrischen Antriebe eignen sich für hohe Lasten, sind kompakt, und ermöglichen eine einfache Steuerung. So kann etwa das mindestens eine Andrückelement zuverlässig aufgrund von Spindelhemmung und/oder eines hohen Haltestroms des Motors trotz grosser Krafteinwirkung beim Ultraschallschweissen des Leiters und des elektrischen Terminals zuverlässig gehalten werden. Insbesondere ein elektrischer Antrieb umfassend einen Encoder, Positions- und/oder Winkelsensor, und/oder einen closed-loop Feedback kann eine optimierte Positions- und Geschwindigkeitskontrolle ermöglichen. Zudem kann eine Überlast- und Fehlererkennung sowie eine Wiederholgenauigkeit zu optimieren.

Das mindestens eine Andrückelement kann beim Andrücken im Schritt b) von einer zum Verschweissen des Leiters mit dem elektrischen Terminal vorgesehenen Sonotrode, insbesondere in der mindestens einen Zustellrichtung, beabstandet sein. Insbesondere kann das mindestens eine Andrückelement einen vorgegebenen Abstand insbesondere in der mindestens einen Zustellrichtung haben.

Dies wird dadurch bewirkt, dass im Schritt a) das Andrückelement nicht ganz bis an die Sonotrode gefahren wird oder auf Anschlag gefahren wird und danach wieder wegbewegt wird. Somit kann die Schwingung eine Entkopplung der Schwingung der Sonotrode und der Andrückelemente erzielt werden.

Dies ermöglicht, dass das mindestens eine Andrückelement nach dem Andrücken des elektrischen Terminals an die Auflagefläche in einem optimierten Abstand zur Sonotrode angeordnet ist.

Die Zustellung von Schritt a) kann eine automatische Dimensionierung eines Behandlungsbereichs ermöglichen, insbesondere angepasst an Dimensionen der Sonotrode, des elektrischen Leiters / des elektrischen Terminals. Somit kann etwa eine Breite der Ultraschallschweisszone automatisch angepasst werden.

Der vorgegebene Abstand ist vorzugsweise so gewählt, dass einzelne Adern der Litze nicht in einer Lücke zwischen Sonotrode und Andrückelement gelangen können, z.B. kleiner als 0.05 mm.

Das mindestens eine Andrückelement kann insbesondere bis zu einem Kontakt des mindestens einen Andrückelements mit der Sonotrode in der mindestens einen Zustellrichtung bewegt werden. Zwischen den Schritten a) und b) kann das Andrückelement in einer der mindestens einen Zustellrichtung entgegengesetzten ersten Gegenrichtung von der Sonotrode insbesondere um einen vorbestimmten Weg wegbewegt werden, so dass es von der Sonotrode beabstandet ist.

Dies ermöglicht ein einfaches Positionieren des mindestens einen Andrückelements relativ zur Sonotrode.

Der Kontakt des Andrückelements mit der Sonotrode kann durch einen erhöhten Widerstand des elektrischen Antriebs detektiert werden.

Beim Kontakt des mindestens einen Andrückelements mit der Sonotrode kann die Bewegung in der mindestens einen Zustellrichtung in Schritt a) beendet werden.

Der Kontakt des Andrückelements mit der Sonotrode kann durch einen zwischen dem mindestens einen Andrückelement und der Sonotrode fliessenden elektrischen Stroms detektiert werden.

Alternativ kann ein Abstand zwischen dem Andrückelement und der Sonotrode durch einen Abstandssensor, etwa durch einen kapazitiven/induktiven/magnetischen Abstandssensor oder einen optischen Abstandssensor, vorzugsweise Laser-Distanzsensor, detektiert werden. Dies ermöglicht etwa, dass die Andrückelemente nicht zwingend die Sonotrode kontaktieren müssen, um in einem Abstand, insbesondere einem vorgegebenen Abstand, von der Sonotrode platziert zu werden.

Für diesen Fall kann die Bewegung aus Schritt a) beendet werden, wenn ein Abstand des mindestens einen Andrückelements zur Sonotrode detektiert wird.

Dabei kann mindestens eine Position des mindestens einen Andrückelements beim Kontakt mit der Sonotrode detektiert werden.

Anhand dieser Position kann etwa ein Lage oder ein Zustand, aber auch ein Typ/die Dimension der Sonotrode bestimmt werden. Zudem kann eine applikationsspezifische Einstellung vorgenommen werden, etwa ein automatisiertes Schweissverfahren auf Basis der bestimmten Lage/Zustands/Typs/Dimension der Sonotrode. Nach einem Werkzeugwechsel kann die Endposition der Andrückelemente automatisch ermittelt werden.

Der elektrische Antrieb kann eine Positionsdetektionseinheit enthalten, insbesondere eine magnetische, eine sensorlose, oder eine optische Positionsdetektionseinheit, mit der die Position des Andrückelements detektiert wird. Die Positionsdetektionseinheit kann ein Potentiometer, einen Resolver, oder einen Encoder umfassen.

Dies ermöglicht eine zuverlässige und einfache Positionsbestimmung des mindestens einen Andrückelements mit hoher Positionsgenauigkeit.

Aus der Position des mindestens einen Andrückelements beim Kontakt mit der Sonotrode kann eine Zustandsgrösse der Sonotrode bestimmt werden. Insbesondere kann es sich um eine Dimension der Sonotrode, eine Position der Sonotrode oder eine Orientierung der Sonotrode oder einen Zustand (z.B. Abnutzung) handeln.

Anhand einer solchen Zustandsgrösse der Sonotrode kann etwa der Andrück- und/oder Schweissprozess optimiert und/oder automatisiert werden. Zudem kann sichergestellt werden, dass die Zustandsgrösse der Sonotrode mit dem angestrebten Schweissvorgang, einer Zustandsgrösse des elektrischen Leiters und/oder des elektrischen Terminals kompatibel ist. Ausserdem kann festgestellt werden, wenn eine falsche Sonotrode eingesetzt ist oder, wenn eine Sonotrode nicht korrekt positioniert oder abgenutzt ist.

Anschliessend an die Schritte a), und insbesondere b), kann Ultraschall in den Leiter eingeleitet werden, sodass der Leiter mit dem elektrischen Terminal verschweisst wird. Dabei ist es denkbar, dass die Auflagefläche eine Auflagefläche eines Ambosses ist, auf der der elektrische Terminal beim Ultraschallschweissen aufliegt.

Die Sonotrode kann in einer Schweissrichtung in den Behandlungsbereich auf den Leiter, der zwischen der Sonotrode und dem elektrischen Terminal angeordnet ist, bewegt werden, vorzugsweise vertikal abgesenkt werden, um den elektrischen Leiter anzudrücken, während die Sonotrode mit Ultraschall beaufschlagt wird.

Durch die automatische Einstellung der Endposition der Andrückelemente kann die thermische Ausdehnung kompensiert werden.

Der Amboss kann zumindest zwei Backen aufweisen und geformt und dimensioniert sein, um den Terminal aufzunehmen. Zumindest eine der Backen, insbesondere beide Backen, können bewegt werden, um den Terminal in einer Zustellrichtung, insbesondere horizontalen Zustellrichtung, kraftschlüssig zwischen den Backen zu klemmen.

Die Backen zum Klemmen des Terminals können eine geringere Höhe relativ zu einer Auflagefläche zum Aufnehmen des Terminals aufweisen als eine Dicke des Terminals.

Dies ermöglicht, dass der Terminal in der Zustellrichtung kraftschlüssig zwischen den Backen geklemmt werden kann. Ein Andrücken durch die Andrückelemente ist dann nicht in jedem Fall erforderlich. Dies minimiert die Fläche des Terminals, die zum zuverlässigen Klemmen unter den grossen Kräften beim Ultraschallschweissen benötigt wird. Somit können Ultraschallverschweissungen auf kleineren Terminals, und somit kleinere elektrische Stecker erzielt werden.

Die Andrückelemente können beim Beaufschlagen der Sonotrode mit Ultraschall den Terminal über einen Kontaktbereich kontaktieren. Optional erstreckt sich der Kontaktbereich weniger als 1.5 mm, insbesondere weniger als 1 mm, vorzugsweise weniger als 0.5 mm von einem Rand des Terminals.

Weiterhin kann ein weiteres Andrückelements in einer der ersten Zustellrichtung entgegengesetzten weiteren Zustellrichtung, insbesondere mittels eines weiteren elektrischen Antriebs bewegt werden. Der elektrische Terminal kann dann an die Auflagefläche mittels des weiteren Andrückelements in der Andrückrichtung angedrückt werden.

Somit kann der Behandlungsbereich beidseitig durch Bewegung der Andrückelemente angepasst und insbesondere zusammen mit der Sonotrode geschlossen werden. Dies ermöglicht, den Behandlungsbereich beidseitig abzuschliessen und/oder sicherzustellen, dass die Sonotrode mittig platziert ist.

Die Bewegung in beide Zustellrichtungen der Andrückelemente kann synchron sein, insbesondere, sodass diese sich gleichmässig auf eine Mitte des Behandlungsbereichs zubewegen bzw. vom der Mitte wegbewegen.

Die Andrückelemente können beidseitig geschlossen werden, ohne eine Sonotrode im Behandlungsbereich zu kontaktieren. Der elektrische Leiter kann in der Mitte des Behandlungsbereichs durch die Andrückelemente relativ zur Sonotrode platziert werden und/oder das elektrische Terminal in der Mitte zur Sonotrode platziert werden.

In einem weiteren Aspekt betrifft die Erfindung eine Vorrichtung zum Verbinden eines elektrischen Leiters mit einem elektrischen Terminal mittels Ultraschall, insbesondere in einem wie zuvor beschriebenen Verfahren.

Die Vorrichtung enthält:
- Mindestens ein Andrückelement, welches in einer insbesondere horizontalen Zustellrichtung und optional auch in einer der Zustellrichtung entgegengesetzten Gegenrichtung bewegbar ist,
- eine Andrückeinheit zum Andrücken des elektrischen Terminals an die Auflagefläche mittels des mindestens einen Andrückelements in einer zur Zustellrichtung transversalen, insbesondere senkrechten, Andrückrichtung.

Erfindungsgemäss enthält die Vorrichtung mindestens einen ersten elektrischen Antrieb zum Bewegen des mindestens einen Andrückelements in der Zustellrichtung und optional auch in der Gegenrichtung.

Die Vorrichtung kann ein erstes Andrückelement und ein zweites Andrückelement umfassen, wie zuvor beschrieben.

Die Vorrichtung kann mindestens einen ersten und einem zweiten elektrischen Antrieb umfassen. Insbesondere kann die Andrückeinheit einen weiteren elektrischen Antrieb umfassen oder daraus bestehen. Das mindestens eine erste beziehungsweise zweite Andrückelement kann in einer Zustellrichtung und in einer Andrückrichtung durch jeweils einen ersten beziehungsweise zweiten elektrischen Zustellantrieb und jeweils eine erste beziehungsweise zweite elektrische Andrückeinheit bewegbar sein.

Der mindestens eine elektrische Antrieb kann einen elektrischen Motor, insbesondere umfassend einen Eisenkern, einen elektromechanischen Linearantrieb, insbesondere umfassend ein Kugelgewindeantrieb, einen Schrittmotor, insbesondere einen closed-loop Schrittmotor, und/oder einen Servomotor umfassen oder daraus bestehen. Ein erster und zweiter elektrische Antrieb, insbesondere der jeweilige Zustellantrieb und/oder die elektrische Antriebeinheit, kann einen solchen elektrischen Motor umfassen oder daraus bestehen.

Die Vorrichtung weist eine Sonotrode zum Verschweissen des Leiters mit dem elektrischen Terminal auf.

Die Vorrichtung kann zumindest eine Bewegungseinheit aufweisen, um die Sonotrode in einen Behandlungsbereich der Vorrichtung zu bewegen und aus dem Behandlungsbereich heraus zu bewegen, insbesondere parallel zur Andrückrichtung. Optional kann die Bewegungseinheit dazu konfiguriert sein, die Sonotrode parallel zur Zustellrichtung in entgegengesetzte Richtungen zu bewegen, sodass diese auf einer Achse mittig im Behandlungsbereich angeordnet werden kann. Die Bewegungseinheit kann ebenfalls mindestens einen elektrischen Antrieb für die Bewegung der Sonotrode umfassen.

Die Vorrichtung kann weiterhin eine Steuer- und/oder Regeleinheit zum Steuern und/oder Regeln des mindestens einen elektrischen Antriebs aufweisen, mittels deren das mindestens eine Andrückelement in einem insbesondere vorgegebenen Abstand von der Sonotrode positionierbar ist.

Die Steuer- und/oder Regelungseinheit kann zum Steuern und/oder Regeln des mindestens einen ersten elektrischen Antriebs zum Bewegen und Andrücken des mindestens einen ersten Andrückelements konfiguriert sein.

Die Steuer- und/oder Regelungseinheit kann sinngemäss zum Steuern und/oder Regeln des mindestens zweiten elektrischen Antriebs für das zweite Andrückelement konfiguriert sein.

Die Vorrichtung kann eine Kontaktdetektionseinheit zum Detektieren eines Kontakts des mindestens einen Andrückelements mit der Sonotrode aufweisen.

Dies ermöglicht, dass das Andrückelement präzise relativ zur Sonotrode positioniert werden kann.

Alternativ oder zusätzlich zu einer Kontaktdetektionseinheit kann die Vorrichtung einen kapazitiven/induktive/magnetischen Abstandssensor oder einen optischen Abstandssensor, vorzugsweise Laser-Distanzsensor, umfassen, um den Abstand zwischen der Sonotrode/dem elektrischen Leiter und dem mindestens einen Andrückelement zu detektieren.

Die Kontaktdetektionseinheit kann einen Strommesser zum Detektieren eines zwischen dem ersten Andrückelement und der Sonotrode fliessenden elektrischen Stroms enthalten.

Die Steuer- und oder Regeleinheit kann programmiert sein, beim Kontakt des mindestens einen Andrückelements mit der Sonotrode die Bewegung in der Zustellrichtung zu beenden.

Alternativ kann die Steuer- und Regeleinheit dazu konfiguriert sein, beim Messen eines vorgegebenen Abstands zwischen dem Andrückelement und der Sonotrode die Bewegung der Sonotrode in der Zustellrichtung zu beenden.

Die Steuer- und Regeleinheit kann dazu konfiguriert sein, den zuvor beschriebenen Schritt b) durchzuführen, wenn der Kontakt/vorgegebene Abstand detektiert wird.

Die Vorrichtung kann weiterhin eine Positionsdetektionseinheit aufweisen, mittels deren eine Position des mindestens einen Andrückelements detektierbar ist, insbesondere bei einem Kontakt oder einem vorgegebenen Abstand des ersten Andrückelements mit/von der Sonotrode.

Aufgrund der Position des Andrückelements im Zeitpunkt des Kontaktierend der Sonotrode kann ein Rückschluss auf die Position oder den Zustand der Sonotrode gezogen werden.

Die Vorrichtung kann daher weiterhin eine Recheneinheit aufweisen, mit der aus der Position des mindestens einen Andrückelements beim Kontakt/vorgegebenen Abstand mit der Sonotrode eine Zustandsgrösse der Sonotrode bestimmbar ist, insbesondere eine Dimension der Sonotrode, eine Position der Sonotrode, und/oder eine Orientierung der Sonotrode.

Die Auflagefläche kann eine Auflagefläche eines Ambosses sein, auf der der elektrische Terminal beim Ultraschallschweissen aufliegt.

Der Amboss kann in einer Andrückrichtung, etwa transversal zu der Zustellrichtung, bewegbar sein, insbesondere pneumatisch bewegbar sein. Alternativ zum Andrücken des Terminals an eine Auflagefläche mittels des mindestens einen Andrückelements in einer Andrückrichtung kann der Terminal dann durch ein Bewegen der Auflagefläche des Ambosses zu dem mindestens einen Andrückelement geklemmt werden. In einer solchen Ausführungsform können die Andrückelemente in einer Andrückrichtung unbeweglich sein.

Die Auflagefläche kann eine Maske umfassen, die zumindest teilweise auf der Auflagefläche angeordnet oder anordbar ist. Die Maske kann konfiguriert sein, um den elektrischen Terminal aufzunehmen, insbesondere im Wesentlichen formschlüssig. Ein Randbereich des elektrischen Terminals kann zwischen der Maske und dem Andrückelement beim Andrücken des Andrückelements angeordnet sein. Die Vorrichtung kann eine Vielzahl von Masken für verschiedene elektrische Terminals umfassen. Alternativ kann lediglich die Auflagefläche zur Aufnahme des elektrischen Terminals dimensioniert und geformt sein.

Der Amboss kann zumindest zwei Backen aufweisen und geformt und dimensioniert sein, um den Terminal aufzunehmen. Zumindest eine der Backen, insbesondere beide Backen können bewegbar sein, um den Terminal in einer Zustellrichtung, insbesondere horizontalen Zustellrichtung, kraftschlüssig zwischen den Backen zu klemmen.

Dies ermöglicht eine Fixierung des Terminals durch den Amboss, sodass die benötigte Kraft zum Klemmen des Terminals auf dem Amboss, insbesondere zwischen dem Amboss und den Andrückelementen, geringer sein kann. Somit kann weniger Fläche des Terminals zum Klemmen vorgesehen werden, sodass eine Grösse der Schweissfläche im Verhältnis zur Klemmfläche des Terminals optimiert werden kann.

Die Backen zum Klemmen des Terminals können eine geringere Höhe relativ zu einer Auflagefläche zum Aufnehmen des Terminals aufweisen als eine Dicke des Terminals. Der Terminal ist typischerweise 1.5 bis 3 mm dick. Die Höhe der Backen zur Auflagefläche kann also geringer sein als 3 mm, insbesondere 2 mm, vorzugsweise 1.5 mm. Um einen ausreichenden Kraftschluss zu ermöglichen, ist die Höhe der Backen zur Auflagefläche jedoch grösser als 0.25 mm, insbesondere grösser als 0.75 mm, vorzugsweise grösser als 1.25 mm.

Dies ermöglicht, dass der Terminal in der Zustellrichtung kraftschlüssig zwischen den Backen und optional auch zwischen den Andrückelementen und dem Amboss geklemmt werden kann. Dies minimiert die Fläche des Terminals, die zum zuverlässigen Klemmen unter den grossen Kräften beim Ultraschallschweissen benötigt wird. Somit können Ultraschallverschweissungen auf kleineren Terminals, und somit kleinere elektrische Stecker erzielt werden.

Die Vorrichtung kann mindestens einen Antrieb aufweisen, um zumindest eine der Backen, insbesondere beide Backen, in Zustellrichtung zu bewegen. Der Antrieb zum Bewegen der Backen kann ein pneumatischer Antrieb oder ein elektrischer Antrieb sein. Ein pneumatischer Antrieb bietet jedoch höhere Kosteneffizienz.

Im Folgenden wird die Erfindung anhand eines Ausführungsbeispiels und der Figuren näher erläutert, die zeigen:
- Figur 1:: eine Frontansicht der erfindungsgemässen Vorrichtung zum Verbinden eines elektrischen Terminals mit einem elektrischen Leiter,
- Figur 2:: einen vergrösserten Ausschnitt des Behandlungsbereichs aus Fig. 1,
- Figur 3:: eine Seitenansicht der erfindungsgemässen Vorrichtung nach Fig. 1,
- Figur 4A:: eine perspektivische Ansicht der Andrückelemente auf einem Gehäuse für die zugehörigen elektrischen Antriebe,
- Figur 4B:: eine Draufsicht auf die Andrückelemente auf einem Gehäuse für die zugehörigen elektrischen Antriebe nach Figur 4A,
- Figur 4C:: einen Querschnitt durch die Andrückelemente und zugehörigen elektrischen Antriebe nach Figur 4B,
- Figur 5A:: eine Seitenansicht einer weiteren Ausführungsform der erfindungsgemässen Vorrichtung,
- Figur 5B:: einen vergrösserten Ausschnitt des Behandlungsbereichs aus Fig. 5A, und
- Figur 5C:: eine schematische Seitenansicht einer erfindungsgemässen Vorrichtung beim Ultraschallverschweissen eines elektrischen Leiters auf einem Terminal.

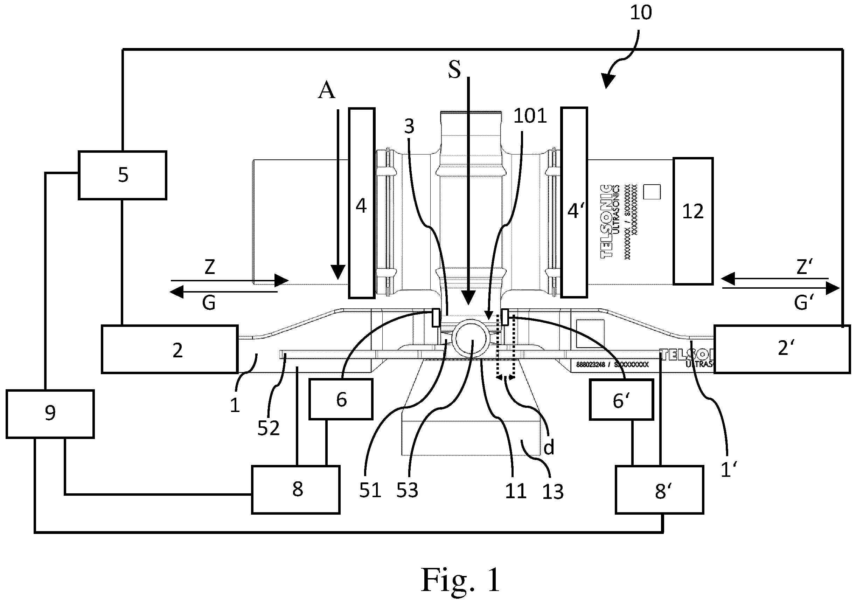

Figur 1 zeigt eine Frontansicht einer erfindungsgemässe Vorrichtung 10 zum Verbinden eines elektrischen Terminals 51 mit einem elektrischen Leiter 53. Der Terminal 51 wird auf einer Auflagefläche 11 angeordnet. Der Terminal 51 wird mit Ultraschall mit dem elektrischen Leiter 53 verschweisst.

Der elektrische Leiter 53 hat eine elektrisch isolierende Umhüllung, die an einem Ende entfernt wurde, sodass er in einem Behandlungsbereich 101 auf den elektrischen Terminal 51 angedrückt und durch Ultraschallbeaufschlagung verschweisst werden kann. Der elektrische Leiter 53 ist eine Litze. Der elektrische Terminal 51 weist eine starre Fläche auf, auf der das Ende des elektrischen Leiters 53 andrückbar ist.

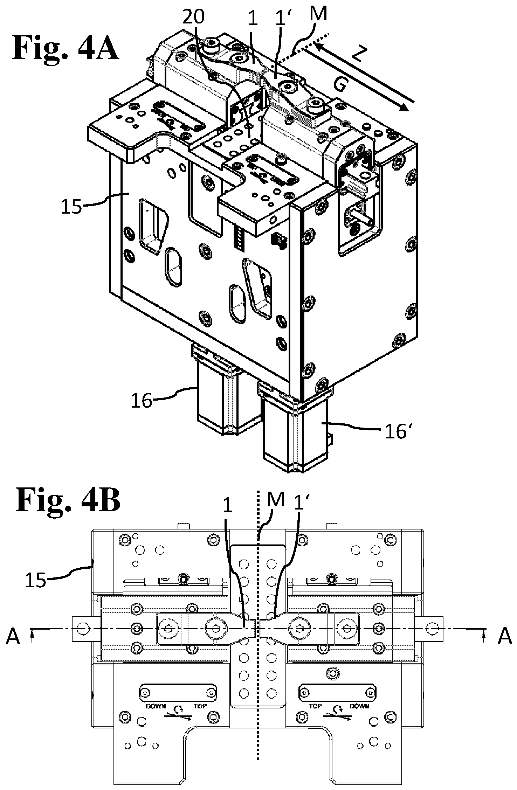

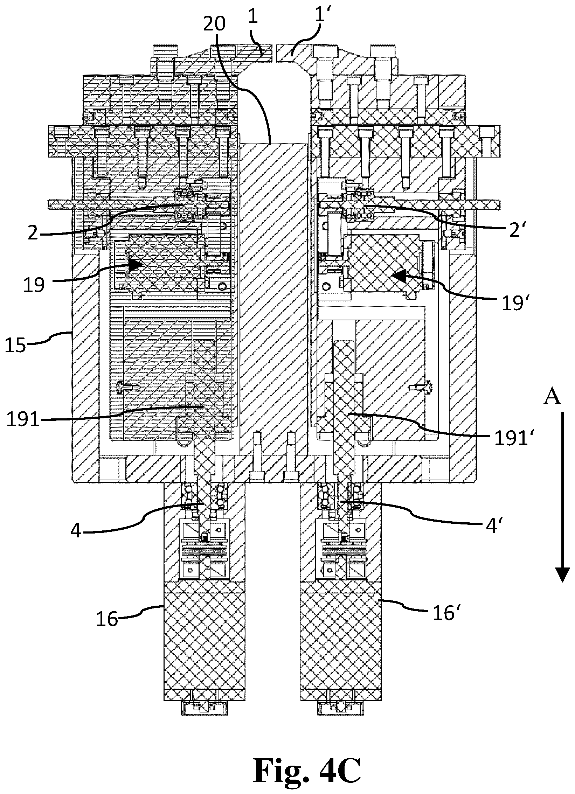

Die Vorrichtung 10 enthält zwei Andrückelement 1, 1', welche in einer horizontalen Zustellrichtung Z, Z' und in einer dieser Zustellrichtung Z, Z' entgegen gesetzten Gegenrichtung G, G' bewegbar sind. Weiterhin enthält die Vorrichtung 10 zumindest eine Andrückeinheit 4, 4' zum Andrücken des Terminals 51 an die Auflagefläche 11 mittels der Andrückelemente 1, 1' in einer zu den Zustellrichtungen Z, Z' senkrechten Andrückrichtung A. Die Andrückeinheit 4, 4' kann zudem die Andrückelemente 1, 1' wieder entgegengesetzt zur Andrückrichtung A anheben. Die Andrückeinheit 4, 4' weist einen elektrischen Antrieb zum Bewegen der Andrückelemente 1 1' auf (in Fig. 1 nur schematisch dargestellt, für Details siehe Fig. 4).

Weiterhin enthält die Vorrichtung 10 elektrische Antriebe 2, 2' zum Bewegen der Andrückelemente 1, 1' in den Zustellrichtungen Z, Z' und in den Gegenrichtungen G, G'.

Bei den ersten elektrischen Antrieben 2, 2', insbesondere allen elektrischen Antrieben, handelt es sich um Schrittmotoren, welche ein hohes Haltemoment und eine präzise Positionierung ermöglichen.

Ausserdem verfügt die Vorrichtung 10 über eine Sonotrode 3 zum Verschweissen des Leiters 53 mit dem Terminal 51. Die Vorrichtung 10 umfasst zudem eine Bewegungseinheit 12, die zur Positionierung der Sonotrode 3 in den Behandlungsbereich 101 und aus dem Behandlungsbereich heraus entlang einer Richtung S und entgegen der Richtung S konfiguriert ist. Die Richtung verläuft parallel zu der Andrückrichtung A. Die Sonotrode 3 ist auf an sich bekannte Art und Weise als Torsionalsonotrode ausgebildet, die um eine Torsionsachse parallel zu den Richtungen Z, G zu Ultraschallschwingungen anregbar ist. Figur 1 zeigt, dass der Behandlungsbereich 101 durch die Auflagefläche 11, die Andrückelemente 1, 1' und die Sonotrode 3 begrenzt wird.

Ausserdem enthält die Vorrichtung 10 eine Steuer- und Regeleinheit 5 zum Steuern bzw. Regeln der ersten elektrischen Antriebe 2, 2', mit welchen die Andrückelemente 1, 1' in einem vorgegebenen Abstand d von der Sonotrode 3 positionierbar sind. Ein exemplarischer vorgegebene Abstand d ist in Fig. 1 schematisch stark vergrössert durch gestrichelte Linien für eines der Andrückelemente 1' dargestellt.

Weiterhin verfügt die Vorrichtung 10 über eine Kontaktdetektionseinheit 6 zum Detektieren eines Kontakts der ersten Andrückelement 1, 1' mit der Sonotrode 3.

Die Kontaktdetektionseinheit 6 weist einen Strommesser, zum Detektieren eines zwischen den ersten Andrückelementen 1, 1' und der Sonotrode 3 fliessenden elektrischen Stroms auf.

Die Steuer- und/oder Regeleinheit 5 aus Fig. 1 ist programmiert, beim Kontakt der ersten Andrückelemente 1, 1' mit der Sonotrode 3 die Bewegung in den Zustellrichtungen Z, Z' zu beenden. Alternativ umfasst die Vorrichtung 10 zumindest einen Abstandssensor zum Positionieren der Andrückelemente 1, 1' in dem vorgegebenen Abstand.

Ferner weist die Vorrichtung 10 eine Positionsdetektionseinheit 8, 8' auf, mit welcher die Position der ersten Andrückelemente 1, 1' detektierbar ist. Die Positionsdetektionseinheit ist durch einen Encoder des als Schrittmotor ausgebildeten elektrischen Antriebs 2, 2' ausgebildet. Die Positionsdetektionseinheit 8, 8' in Fig. 1 ist mit der Kontaktdetektionseinheit wirkverbunden, sodass insbesondere bei einem Kontakt der ersten Andrückelemente 1, 1' mit der Sonotrode 3 die Position detektiert werden kann.

Zudem weist die Vorrichtung 10 eine Recheneinheit 9 auf, mit welcher aus der Position der Andrückelemente 1, 1' beim Kontakt mit der Sonotrode 3 eine Zustandsgrösse der Sonotrode 3 bestimmbar ist, insbesondere eine Position oder eine Orientierung der Sonotrode 3, sowie deren Abnutzung.

Die Recheneinheit 9 ist mit der Positionsdetektionseinheit 8, 8' und der Steuer- und Rechnungseinheit 5 für eine Steuerung der Vorrichtung 10 verbunden, insbesondere anhand der Zustandsgrösse(n).

Die Auflage ist eine Auflagefläche 11 eines Ambosses 13, auf der der Terminal 51 beim Ultraschallschweissen aufliegt.

Zum Verbinden des Leiters 53 mit dem Terminal 51 werden die beiden Andrückelemente 1, 1' in den Zustellrichtungen Z, Z' bewegt bis sie die Sonotrode 3 kontaktieren und dann um den vorbestimmten Wert zurückbewegt.

In einem nachfolgenden Schritt wird der Terminal 51 mittels der ersten Andrückelemente 1, 1' in der Andrückrichtung A an die Auflagefläche 11 angedrückt. Die Bewegung erfolgt mittels der ersten elektrischen Antriebe 2, 2'.

Der Kontakt der Andrückelemente 1, 1' mit der Sonotrode 3 wird dazu detektiert. Beim Kontakt der Andrückelemente 1, 1' mit der Sonotrode 3 wird die Bewegung in der jeweiligen Zustellrichtung Z, Z' beendet.

Der Kontakt der Andrückelemente 1, 1' mit der Sonotrode 3 wird durch einen zwischen den Andrückelementen 1, 1' und der Sonotrode 3 fliessenden elektrischen Stroms detektiert.

Die Position des ersten Andrückelements 1 wird beim Kontakt mit der Sonotrode 3 bestimmt. Aus der Position der ersten Andrückelemente 1, 1' beim Kontakt mit der Sonotrode 3 wird die Zustandsgrösse der Sonotrode 3 bestimmt.

Anschliessend wird Ultraschall in den Leiter 53 eingeleitet, sodass der Leiter 53 mit dem Terminal 51 verschweisst wird.

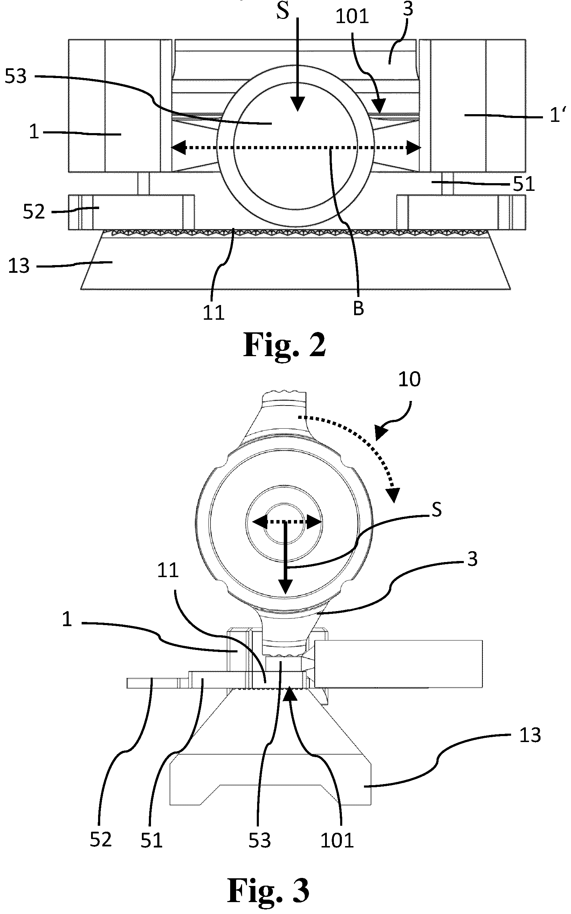

Figur 2 zeigt einen vergrösserten Ausschnitt des Behandlungsbereichs 101 nach Fig. 1. Die Andrückelemente 1, 1' wurden durch die elektrischen Antriebe 2, 2' (siehe Fig. 1) so zusammengefahren, sodass die Sonotrode 3 von den Andrückelementen 1, 1' seitlich kontaktiert wird. Figur 2 zeigt zudem, dass die Sonotrode 3 beim Verschweissen des elektrischen Leiters 53 und des elektrischen Terminals 51, welches auf einer Maske 52 angeordnet ist, senkrecht nach unten in Richtung S auf die Auflagefläche 11 zubewegt wurde. Der elektrische Leiter 53, der in Fig. 2 exemplarisch teilweise im Querschnitt dargestellt ist, wird durch die Sonotrode 3 beim Verschweissen zusammengedrückt, sodass eine Breite einer Schweisszone in Fig. 2 im Wesentlichen einer Breite B des Behandlungsbereichs 101 entspricht. Wie zuvor beschrieben, werden die Andrückelemente 1, 1' in einem vorgegebenen Abstand d von der Sonotrode 3 positioniert.

Figur 3 zeigt eine Seitenansicht der erfindungsgemässen Vorrichtung 10 nach Fig. 1. Der elektrische Terminal 51 ist auf einer Auflagefläche 11 angeordnet und wird von einer Maske 52 gehalten, die komplementär zu dem elektrischen Terminal 51 geformt ist, sodass dieser im Wesentlichen flach auf der Auflagefläche 11 des Ambosses 13 aufliegt. Zur verbesserten Übersicht der Vorrichtung 10 wurde in Fig. 3 das Andrückelement 1' weggelassen und nur Andrückelement 1 dargestellt. Figur 3 zeigt zudem, dass der elektrische Leiter 53 in einem Endbereich von einer elektrisch isolierenden Umhüllung befreit ist. Der elektrische Leiter 53 wurde in diesem Endbereich von der Sonotrode 3 mit dem elektrischen Terminal 51 verschweisst, indem die Sonotrode 3 mit Ultraschall beaufschlagt wurde und den elektrischen Leiter 53 mit der Sonotrode 3 auf das elektrische Terminal 51 gedrückt hat, indem die Sonotrode 3 in Richtung S in den Behandlungsbereich 101 bewegt wird.

Die Sonotrode 3 in Fig. 3 ist drehbar gelagert, was durch einen gestrichelten Pfeil in Fig. 3 dargestellt wurde.

Figur 4A zeigt eine perspektivische Ansicht der Andrückelemente 1, 1' auf einem Gehäuse 15 für die zugehörigen elektrischen Antriebe. Unter dem Gehäuse 15 sind zwei Antriebsmotoren 16, 16' angeordnet, die am Gehäuse 15 fixiert sind. Die Andrückelemente 1, 1' sind jeweils in einer Zustellrichtung Z und Gegenrichtung G auf eine Mittelachse M zwischen den elektrischen Antrieben durch die elektrischen Antriebe bewegbar. Ein Amboss kann auf einer Auflagefläche 20 des Gehäuses 15 angeordnet werden. Somit kann ein Behandlungsbereich vom Amboss und den Andrückelementen 1, 1' eingeschlossen werden. Die Andrückelemente sind unabhängig voneinander bewegbar oder gemeinsam in gleichem Masse in entgegengesetzte Richtungen Z, G bewegbar. Eine Sonotrode (nicht gezeigt in Fig. 4A) kann in der Mitte zwischen den Andrückelementen 1, 1' angeordnet werden und beidseitig durch die Andrückelemente 1, 1' kontaktiert werden. Während der beidseitigen Kontaktierung der Sonotrode mit den Andrückelementen 1, 1' wird ein Stromfluss zwischen den Andrückelementen 1, 1' und der Sonotrode gemessen, um den Kontakt zu überprüfen. Alternativ können zuvor beschriebene Abstandssensoren verwendet werden. Anhand von Positionsmessungen der Andrückelemente 1, 1' durch Encoder der elektrischen Antriebe bei der Kontaktierung kann eine Lage, ein Zustand, ein Typ, und eine Dimension der Sonotrode bestimmt werden. Eine Recheneinheit kann die Lage, der Zustand, der Typ und/oder die Dimension der Sonotrode somit kontrollieren und sicherstellen, dass ordnungsgemäss durch Ultraschall geschweisst werden kann. Anschliessend werden die Andrückelemente 1, 1' von der Sonotrode wegbewegt, damit diese nicht bei der Ultraschallbeaufschlagung zum Verschweissen eines elektrischen Leiters und dem elektrischen Terminal mit der Schwingung koppeln. Daraufhin kann der elektrische Leiter und der elektrische Terminal miteinander durch Ultraschallbeaufschlagung verschweisst werden.

Figur 4B zeigt eine Draufsicht auf die Andrückelemente 1, 1' auf einem Gehäuse für die zugehörigen elektrischen Antriebe und Andrückeinheiten nach Figur 4A. Figur 4B zeigt zudem einen Querschnitte A-A, der sich durch die Andrückelemente 1, 1' und die Mittelachse M eines Behandlungsbereichs zwischen den Andrückelementen 1, 1' erstreckt.

Figur 4C zeigt einen Querschnitt A-A durch die Andrückelemente 1, 1' und zugehörigen elektrischen Antriebe 2, 2' nach Figur 4B. Figur 4C zeigt zudem zwei Antriebsmotoren 16, 16'. Diese Antriebsmotoren 16, 16' sind dazu konfiguriert, eine gesamte Andrückelementbaugruppe 19, 19' inklusive des jeweiligen Andrückelements 1, 1' anzuheben oder abzusenken. Die linke Andrückelementbaugruppe 19 wurde in Fig. 4C zur besseren Sichtbarkeit doppelt schraffiert dargestellt. Zudem zeigt Fig. 4C, dass die Antriebsmotoren 16, 16' mit stehenden Spindeln 192, 192' gekoppelt sind. Durch Drehung der Spindeln 192, 192', die mit jeweiligen Spindelumlenkbuchsen 191, 191' funktional verbunden sind, können die Andrückelementbaugruppen 19, 19' angehoben/abgesenkt werden. Die Antriebsmotoren 16, 16' in Fig. 4C sind im Gegensatz zu Fig. 1 nicht oberhalb der Andrückelemente 1, 1' angeordnet. Eine Auflagefläche 20 für den Amboss sowie das Gehäuse bleiben somit auf einer konstanten Höher, während die Andrückelementbaugruppen 19, 19' verfahren werden können.

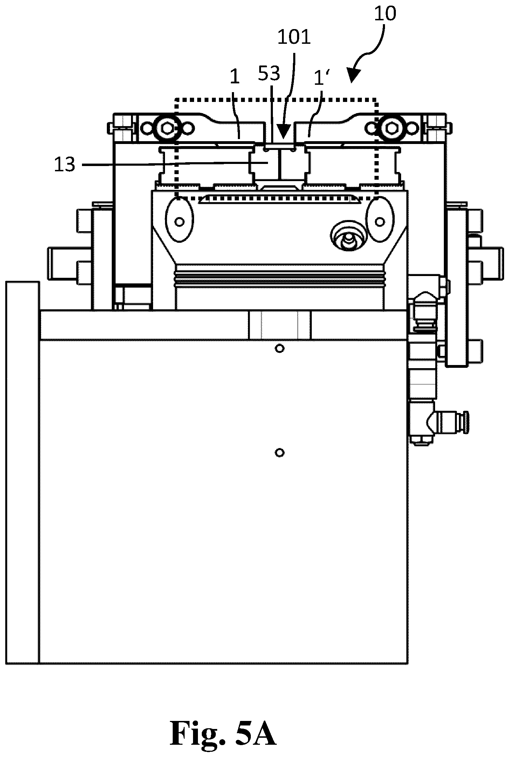

Figur 5A zeigt eine Seitenansicht einer weiteren Ausführungsform der erfindungsgemässen Vorrichtung 10 umfassend zwei Andrückelemente 1, 1' und einen Amboss 13, die einen Behandlungsbereich 101 definieren. Die Andrückelemente 1, 1' sind, wie zuvor beschrieben, in horizontaler Zustellrichtung durch einen elektrischen Antrieb bewegbar (nicht gezeigt in Fig. 5A). Zudem zeigt Fig. 5A, dass der Amboss 13 ohne eine zusätzliche Maske geformt und dimensioniert ist, um einen Terminal 51 aufzunehmen und kraftschlüssig zu klemmen, wie nachfolgend detailliert beschrieben wird.

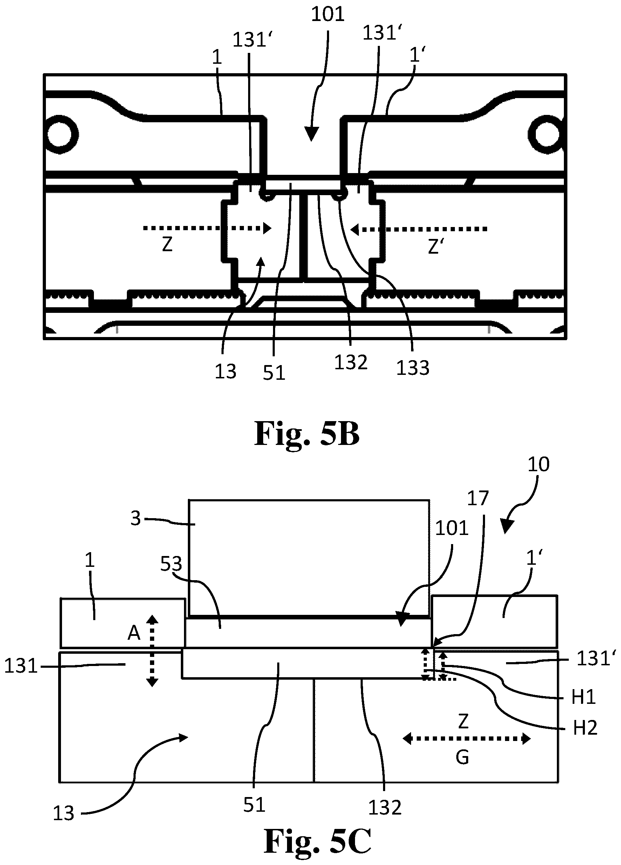

Figur 5B zeigt einen vergrösserten Ausschnitt des Behandlungsbereichs 101 aus Fig. 5A. Der Amboss 13 weist zwei Backen 131, 131' auf, die beidseitig in horizontaler Zustellrichtung Z, Z' aufeinander zu bewegbar sind, sodass der Terminal 51 beidseitig zwischen den Backen 131, 131' kraftschlüssig geklemmt wird. Zudem bildet der Amboss 13 eine Auflagefläche 132, die zur Aufnahme des Terminals 51 geformt ist. Die Backen 131, 131' weisen an lateralen Enden der Aufnahmefläche jeweils einen Hinterstich 133 auf, sodass Terminals 51 trotz einer unregelmässigen Geometrie zuverlässig aufgenommen werden können. Die Andrückelemente 1, 1' sind unabhängig von den Backen 131, 131' in Zustellrichtung Z, Z' und eine Gegenrichtung bewegbar. Die Backen 131, 131' können durch pneumatische Antriebe in Zustellrichtung Z, Z' und Gegenrichtung bewegbar sein.

Figur 5B zeigt zudem, dass die Backen 131, 131' lösbar an der Vorrichtung befestigt sind, sodass andere Backen 131, 131' angebracht werden können, um Terminals 51 mit anderen Dimensionen aufzunehmen. Die Backen 131, 131' sind so ausgebildet, dass die Backen 131, 131' beim Klemmen des Terminals 51 nur einen geringen Abstand voneinander aufweisen. Somit kann die Auflagefläche 132 das Terminal 51 möglichst grossflächig beim Ultraschallschweissen stützen.

Figur 5C zeigt eine schematische Seitenansicht einer erfindungsgemässen Vorrichtung 10 beim Ultraschallverschweissen eines elektrischen Leiters 53 auf einem Terminal 51.

Der Terminal 51 ist auf einer Auflagefläche 132 eines Ambosses 13 angeordnet. Der Terminal 51 ist zudem zwischen Backen 131, 131' des Ambosses 13 kraftschlüssig geklemmt wie zuvor beschrieben. Die Backen 131, 131' weisen eine geringere Höhe H1 in vertikaler Richtung relativ zu der Auflagefläche 132 auf, als eine Höhe H2 des Terminals 51.

Somit kann der Terminal 51 weiterhin von Andrückelementen 1, 1' der Vorrichtung 10 in einer Andrückrichtung A, senkrecht zu einer Zustellrichtung Z berührt oder sogar angedrückt werden, ohne von den Backen 131, 131' blockiert zu werden, während der Terminal 51 geklemmt wird.

Die Andrückelemente 1, 1' und der Amboss 13 sind relativ zueinander bewegbar, insbesondere durch ein Absenken der Andrückelemente 1, 1,' oder durch ein Anheben des Ambosses 13. Die Vorrichtung 10 kann zu diesem Zweck einen pneumatischen Antrieb aufweisen, der diese Relativbewegung des Ambosses 13 und/oder der Andrückelemente 1, 1' ausführen kann. Der Terminal 51 in Fig. 5C wird auf einer Oberseite von den Andrückelementen 1, 1' in einem Kontaktbereich 17 kontaktiert. Der Kontaktbereich 17 erstreckt sich lediglich weniger 0.5 mm von einem Rand des Terminals 51 entlang der Oberseite des Terminals 51, sodass eine möglichst grosse Schweissfläche erzielt wird.

Alternativ können die Andrückelemente 1, 1' vom Terminal beabstandet angeordnet werden, sodass ein vorgegebener Abstand eingehalten wird. Der vorgegebene Abstand ist vorzugsweise so gewählt, dass einzelne Adern der Litze eines elektrischen Leiters nicht in einer Lücke zwischen den Andrückelementen 1, 1' und dem Terminal 51 gelangen können, z.B. kleiner als 0.05 mm. In diesem Fall können die Andrückelemente 1, 1' und/oder der Amboss 13 nicht in einer Andrückrichtung oder relativ zueinander bewegbar sein.

Figur 5C zeigt zudem, dass eine Sonotrode 3 der Vorrichtung 10 eine nur geringfügig geringere Breite als das Terminal 51 aufweist. Die Sonotrode 3 wird zum Ultraschallschweissen des Leiters 53 und des Terminals 51 in einen Behandlungsbereich 101 abgesenkt parallel zu der Andrückrichtung A. Die Andrückelemente 1, 1' in Fig. 5C wurden wie zuvor beschrieben beim Ultraschallschweissen geringfügig von der Sonotrode 3 beabstandet angeordnet, sodass die Andrückelemente 1, 1' von der Ultraschallbeaufschlagung entkoppelt sind.

Zu diesem Zweck kann, wie zuvor beschrieben, ein elektrischer Antrieb (nicht gezeigt in Fig. 5C) die Andrückelemente 1, 1' in eine Gegenrichtung G zur Zustellrichtung Z bewegen, falls ein Abstand/Kontakt zur Sonotrode detektiert wurde, etwa durch eine zuvor beschriebene Kontaktdetektionseinheit.

## Patentansprüche

1. Verfahren zum Verbinden eines elektrischen Leiters (53) mit einem elektrischen Terminal (51) mittels Ultraschall, enthaltend die Schritte
a) Bewegen mindestens eines Andrückelements (1, 1') in mindestens einer insbesondere horizontalen Zustellrichtung (Z) in Richtung des Terminals (51), und
b) insbesondere Andrücken des Terminals (51) an eine Auflagefläche (11, 132) mittels des mindestens einen Andrückelements (1) in einer zur mindestens einen Zustellrichtung (Z) transversalen, insbesondere senkrechten, Andrückrichtung (A),
**dadurch gekennzeichnet, dass**
das Bewegen im Schritt a) mittels mindestens einem elektrischen Antrieb (2) erfolgt.

2. Verfahren gemäss Anspruch 1,
wobei der mindestens eine elektrische Antrieb (2) aufweist:
- einen elektrischen Linearmotor, insbesondere umfassend einen Eisenkern,
- einen elektromechanischen Linearantrieb, insbesondere umfassend ein Kugelgewindetrieb,
- einen Schrittmotor, insbesondere einen closed-loop Schrittmotor, und/oder
- einen Servomotor.

3. Verfahren gemäss einem der vorangehenden Ansprüche,
wobei das mindestens eine Andrückelement (1) beim Andrücken im Schritt b) von einer zum Verschweissen des Leiters (53) mit dem Terminal (51) vorgesehenen Sonotrode (3) insbesondere in der Zustellrichtung (Z) beabstandet ist und insbesondere einen vorgegebenen Abstand (d) insbesondere in der Zustellrichtung (Z) von der Sonotrode (3) hat.

4. Verfahren gemäss Anspruch 3,
wobei das mindestens eine Andrückelement (1)
- im Schritt a) bis zu einem Kontakt des mindestens einem Andrückelements (1) mit der Sonotrode (3) in der Zustellrichtung (Z) bewegt wird und
- zwischen den Schritten a) und b) in einer der Zustellrichtung (Z) entgegengesetzten ersten Gegenrichtung (G) von der Sonotrode (3) insbesondere um einen vorbestimmten Weg wegbewegt wird, sodass es von der Sonotrode (3) beabstandet ist.

5. Verfahren gemäss Anspruch 4,
wobei der Kontakt des mindestens einen Andrückelements (1) mit der Sonotrode (3) detektiert wird und beim Kontakt des mindestens einen Andrückelements (1) mit der Sonotrode (3) die Bewegung in der ersten Zustellrichtung (Z) in Schritt a) beendet wird.

6. Verfahren gemäss einem der Ansprüche 4 und 5,
wobei der Kontakt des mindestens einen Andrückelements (1) mit der Sonotrode (3) durch einen zwischen dem mindestens einen Andrückelement (1) und der Sonotrode (3) fliessenden elektrischen Stroms detektiert wird.

7. Verfahren gemäss einem der Ansprüche 4 bis 6,
wobei zumindest eine Position des mindestens einen Andrückelements (1) beim Kontakt mit der Sonotrode (3) detektiert wird.

8. Verfahren gemäss Anspruch 7,
wobei der mindestens eine elektrische Antrieb (2) eine Positionsdetektionseinheit (8) enthält, insbesondere eine magnetische, eine sensorlose, oder eine optische Positionsdetektionseinheit, vorzugsweise umfassend ein Potentiometer, einen Resolver, oder einen Encoder, mittels dessen die Position des mindestens einen Andrückelements (1) detektiert wird.

9. Verfahren gemäss einem der Ansprüche 7 und 8,
wobei aus der Position des mindestens einen Andrückelements (1) beim Kontakt mit der Sonotrode (3) eine Zustandsgrösse der Sonotrode (3) bestimmt wird, insbesondere eine Dimension der Sonotrode (3), einen Zustand der Sonotrode (3), eine Position der Sonotrode (3), oder eine Orientierung der Sonotrode (3).

10. Verfahren gemäss einem der vorangehenden Ansprüche, enthaltend den weiteren Schritt:
c) Einleiten von Ultraschall in den Leiter (53), sodass der Leiter (53) mit dem Terminal (51) verschweisst wird.

11. Verfahren gemäss Anspruch 10,
wobei die Auflagefläche (11, 132) eine Auflagefläche (11) eines Ambosses (13) ist, auf der den Terminal (51) beim Ultraschallschweissen aufliegt.

12. Verfahren nach Anspruch 11, wobei der Amboss (13) zumindest zwei Backen (131, 131') aufweist und geformt und dimensioniert ist, um den Terminal (51) aufzunehmen, wobei zumindest eine der Backen (131, 131'), insbesondere beide Backen (131, 131') bewegt wird, um den Terminal (51) in einer Zustellrichtung, insbesondere horizontalen Zustellrichtung (Z), kraftschlüssig zwischen den Backen (131, 131') zu klemmen.

13. Verfahren gemäss einem der vorangehenden Ansprüche, enthaltend die weiteren Schritte
- Bewegen mindestens eines weiteren Andrückelements (1') in einer der ersten Zustellrichtung (Z) entgegengesetzten zweiten Zustellrichtung (Z'), insbesondere mittels eines weiteren elektrischen Antriebs (2'),
- Andrücken des Terminals (51) an die Auflagefläche (11) mittels des weiteren Andrückelements (1') in der Andrückrichtung (A).

14. Vorrichtung (10) zum Verbinden eines elektrischen Leiters (53) mit einem elektrischen Terminal (51) mittels Ultraschall, insbesondere in einem Verfahren gemäss einem der vorangehenden Ansprüche, enthaltend
- mindestens ein Andrückelement (1), welches in einer insbesondere horizontalen Zustellrichtung (Z) und optional auch in einer der Zustellrichtung (Z) entgegengesetzten Gegenrichtung (G) bewegbar ist,
- eine Andrückeinheit (4) zum Andrücken des Terminals (51) an die Auflagefläche (11) mittels des mindestens einen Andrückelements (1) in einer zur Zustellrichtung (Z) transversalen, insbesondere senkrechten, Andrückrichtung (A),
**dadurch gekennzeichnet, dass**
die Vorrichtung (10) weiterhin mindestens einen elektrischen Antrieb (2) zum Bewegen des mindestens einen Andrückelements (1) in der Zustellrichtung (Z) und optional auch in der Gegenrichtung (G) enthält.

15. Vorrichtung (10) gemäss Anspruch 14,
wobei die Vorrichtung (10) weiterhin eine Sonotrode (3) zum Verschweissen des Leiters (53) mit dem Terminal (51) aufweist.

16. Vorrichtung (10) gemäss einem der Ansprüche 14 bis 15, wobei die Vorrichtung (10) weiterhin eine Steuer- und/oder Regeleinheit (5) zum Steuern und/oder Regeln des mindestens einen elektrischen Antriebs (2) aufweist, mittels deren das mindestens eine Andrückelement (1) in einem insbesondere vorgegebenen Abstand (d) von der Sonotrode (3) positionierbar ist.

17. Vorrichtung (10) gemäss einem der Ansprüche 14 bis 16, wobei die Vorrichtung (10) weiterhin eine Kontaktdetektionseinheit (6) zum Detektieren eines Kontakts des mindestens einen Andrückelements (1) mit der Sonotrode (3) aufweist.

18. Vorrichtung (10) gemäss Anspruch 17,
wobei die Kontaktdetektionseinheit (6) einen Strommesser (7) zum Detektieren eines zwischen dem mindestens einen Andrückelement (1) und der Sonotrode (3) fliessenden elektrischen Stroms enthält.

19. Vorrichtung (10) gemäss einem der Ansprüche 16 bis 18, wobei die Steuer- und/oder Regeleinheit (5) programmiert ist, beim Kontakt des mindestens einen Andrückelements (1) mit der Sonotrode (3) die Bewegung in der Zustellrichtung (Z) zu beenden.

20. Vorrichtung (10) gemäss einem der Ansprüche 14 bis 19, wobei die Vorrichtung (10) weiterhin eine Positionsdetektionseinheit (8) aufweist, mittels deren eine Position des mindestens einen Andrückelements (1) detektierbar ist, insbesondere bei einem Kontakt des mindestens einen Andrückelements (1) mit der Sonotrode (3).

21. Vorrichtung (10) gemäss einem der Ansprüche 14 bis 20, wobei die Vorrichtung (10) weiterhin eine Recheneinheit (9) aufweist, mittels deren aus der Position des mindestens einen Andrückelements (1) beim Kontakt mit der Sonotrode (3) eine Zustandsgrösse der Sonotrode (3) bestimmbar ist, insbesondere eine Dimension der Sonotrode (3), eine Position der Sonotrode (3) oder eine Orientierung der Sonotrode (3).

22. Vorrichtung (10) gemäss einem der Ansprüche 14 bis 21, wobei die Auflagefläche (11) eine Auflagefläche (11) eines Ambosses (13) ist, auf der der Terminal (51) beim Ultraschallschweissen aufliegt.

23. Vorrichtung (10) gemäss Anspruch 22, wobei der Amboss (13) zumindest zwei Backen (131, 131') aufweist und geformt und dimensioniert ist, um den Terminal (51) aufzunehmen, wobei zumindest eine der Backen (131, 131'), insbesondere beide Backen (131, 131'), bewegbar ist, um den Terminal (51) in einer Zustellrichtung, insbesondere horizontalen Zustellrichtung (Z), kraftschlüssig zwischen den Backen (131, 131') zu klemmen.
